# EUROPÄISCHE PATENTSCHRIFT

(11) **EP 0 754 843 B1**
(45) Veröffentlichungstag und Bekanntmachung des Hinweises auf die Patenterteilung: **10.09.2003**
(21) Anmeldenummer: 96107320.2
(22) Anmeldetag: 09.05.1996
(51) Int. Cl.: F02B 37/10, F02B 37/18

(54) **Brennkraftmaschine mit Abgasturbolader und Verfahren zur Beschleunigung des Abgasturboladers einer Brennkraftmaschine**
Internal combustion engine having an exhaust turbocharger and method for accelerating the exhaust turbocharger of an internal combustion engine
Moteur à combustion interne comprenant un turbocompresseur d'échappement et procédé d'accélération de turbocompresseur d'un moteur à combustion interne

(30) Priorität: 19.07.1995 DE 19526327
(43) Veröffentlichungstag der Anmeldung: 22.01.1997
(73) Patentinhaber: Dr.Ing.h.c. F. Porsche Aktiengesellschaft, 70435 Stuttgart (DE)
(72) Erfinder: Striebich, Helmut, 76227 Karlsruhe (DE)

(56) Entgegenhaltungen:
- DE-A- 4 316 761
- DE-C- 3 504 465
- GB-A- 804 124
- GB-A- 1 140 877
- GB-A- 2 121 474
- US-A- 4 793 140

## Beschreibung

Die Erfindung betrifft eine Brennkraftmaschine mit Abgasturbolader nach der Gattung des Anspruches 1 und ein Verfahren zur Beschleunigung des Abgasturboladers einer Brennkraftmaschine nach der Gattung des Anspruches 6.

Aus der DE 35 04 465 C1 ist eine Brennkraftmaschine mit Abgasturbolader bekannt, bei der das Verdichterrad des Abgasturboladers außer mit einer Normalbeschaufelung mit einer Zusatzbeschaufelung versehen ist, die mit einem gerichteten Druckluftstrahl beaufschlagbar ist. Mit Hilfe dieser Druckluftbeaufschlagung der Zusatzbeschaufelung soll eine verbesserte Beschleunigung des Abgasturboladers insbesondere beim Anlauf erreicht werden. Zur Erzeugung des Druckluftstrahls wird ein Druckluftbehälter von einem Kompressor aufgeladen, der mit einer auf die Zusatzbeschaufelung ausgerichteten Düse verbindbar ist. Im Bedarfsfall wird die Zusatzbeschaufelung am Verdichterrad über die ausgerichtete Düse von der im Druckluftspeicher gespeicherten Luft angeströmt.

Aus der DE 43 16 761 A1 ist weiterhin ein Verfahren zur Beschleunigung eines Abgasturboladers bekannt, bei dem in einer Beschleunigungsphase der Brennkraftmaschine ein Ausgang des mit dem Abgasstrom beaufschlagten Turbinengehäuses an seiner Ausgangsseite zusätzlich kurzzeitig mit einem Unterdruckbehälter verbunden werden kann. Durch das Druckgefälle am Turbinenrad wird damit eine verbesserte Beschleunigung erzielt. Dazu ist ein mit dem Turbinengehäuse verbindbarer Unterdruckbehälter erforderlich, der mit der Saugseite eines am Kraftfahrzeug oder der Brennkraftmaschine vorhandenen oder zusätzlichen Kompressors verbunden ist.

Der Erfindung liegt demgegenüber die Aufgabe zugrunde, mit möglichst einfachem Aufbau und auf energetisch günstige Weise eine verbesserte Beschleunigung des Abgasturboladers inbesondere in der Hochlaufphase zu erreichen. Dabei soll insbesondere auf einen zusätzlichen Kompressor oder die Zusatzbelastung eines vorhandenen Kompresseors verzichtet werden.

Diese Aufgabe wird mit den kennzeichnenden Merkmalen der Ansprüche 1 und 6 gelöst.

Eine deutliche Verbesserung des Hochlaufverhaltens des Abgasturboladers wird dadurch erreicht, daß das Turbinenrad des Abgasturboladers zusätzlich zur herkömmlichen Beaufschlagung mit Verbrennungsabgasen aus dem Abgasstrang mit dem aus einem Druckspeicher gespeisten. zuvor gespeicherten Gasstrom aus dem Brennraum mindestens eines Zylinders der Brennkraftmaschine beaufschlagbar ist. Durch die Beaufschlagung des Düsenelementes bzw. des Turbinenrades mit dem gespeicherten Verdichtungs- bzw. Verbrennungsdruck kann auf einen zusätzlichen drucklufterzeugenden Kompressor verzichtet werden. In Betriebsphasen der Brennkraftmaschine, in denen eine Unterstützung des Abgasturboladers bzw. des Turbinenrades nicht erforderlich ist. wird ein Druckspeicher mit dem unter Druck stehenden Gas mindestens eines Zylinders der Brennkraftmaschine aufgeladen. Aus diesem Druckspeicher kann dann bei Beschleunigungsphasen bzw. beim Anlauf des Abgasturboladers das Turbinenrad über das Düsenelement zusätzlich zum anliegenden Abgasstrom mit dem expandierenden, zuvor gespeicherten Gas beaufschlagt werden. Damit ist ein wesentlich schnelleres Hochlaufen möglich.

Das Düsenelement zur zeitweisen Beaufschlagung des Turbinenrades ist dabei vorteilhafterweise mit dem Zylinderkopf mindestens eines Zylinders verbunden. In der Leitungsverbindung zum Düsenelement ist dabei ein Rückschlagventil angeordnet, das ein Rückströmen des Gases in den Zylinder verhindert, so daß Einflüsse durch rückströmende Gase auf den Ladungswechsel und den Verbrennungsablauf vermieden werden.

Eine zusätzliche Beaufschlagung des Turbinenrades über das Düsenelement erfolgt in vorteilhafter Weise so, daß nur beim Anlauf bzw. in der Beschleunigungsphase des Abgasturboladers diese Zusatzbeaufschlagung erfolgt. Dazu ist in der Verbindung zwischen dem Düsenelement und dem Zylinder bzw. dem Zylinderkopf ein Steuerventil angeordnet, das in Abhängigkeit vom Betriebszustand der Brennkraftmaschine steuerbar ist und somit nur in definierten Betriebsphasen eine Zusatzbeaufschlagung des Abgasturboladers erfolgt.

Ein besonders einfacher und platzsparender Aufbau ergibt sich, wenn das Steuerventil am Düsenelement angeordnet ist und die Verbindungsleitung zwischen Düsenelement und Zylinder im Querschnitt so ausgebildet ist, daß die Leitung als Druckspeicher wirkt. Die Beaufschlagung des Turbinenrades über das Düsenelement erfolgt in vorteilhafter Weise so, daß das Steuerventil am Düsenelement geöffnet wird, wenn die Drosselklappe (Drosselelement) zur Regelung der Verbrennungsluftzufuhr eine definierte Öffnungsstellung überschreitet bzw. erreicht und gleichzeitig das Abblasventil (waste-gate) noch geschlossen ist. Die Öffnungszeit bzw. Öffnungsdauer des Steuerventils kann jedoch auch ohne weiteres fest vorgegeben sein.

Weitere Vorteile und vorteilhafte Weiterbildungen der Erfindung ergeben sich aus den Unteransprüchen und der Beschreibung.

Ein Ausführungsbeispiel der Erfindung ist in der nachfolgenden Beschreibung und Zeichnung näher erleutert. Letztere zeigt in
- Fig. 1: eine schematische Darstellung einer Brennkraftmaschine mit Abgasturbolader und in
- Fig. 2: stark vereinfacht Teile des Zylinderkopfes und des Abgasturboladers.

Die in diesem Ausführungsbeispiel beschriebene Brennkraftmaschine 1 ist - ohne Beschränkung auf diese Ausführungsform - als Reihenmotor mit vier Zylindern ausgebildet. Die Auslaßkanäle 2 der Brennkraftmaschine sind über eine Abgasleitung 3 mit einem Abgasturbolader 4 verbunden. Die Abgase der Abgasleitung 3 beaufschlagen das im Turbinenteil 5 des Abgasturboladers 4 befindliche Turbinenrad 6 und gelangen von dort in die nachgeschaltete, nicht näher dargestellte Abgasleitung 7. Von der zum Turbinenteil 5 führenden Abgasleitung 3 zweigt eine Bypaßleitung 8 ab, die unter Umgehung des Turbinenteils 5 in die weiterführende Abgasleitung 7 mündet. In der Bypaßleitung 8 ist ein an sich bekanntes Abblasventil 9 (waste-gate) angeordnet, über das auf an sich bekannte Weise der Ladedruck regelbar ist. Das Turbinenrad 6 des Abgasturboladers 4 ist über eine gemeinsame Welle 10 mit dem im Verdichterteil angeordneten, nicht näher dargestellten Verdichterrad verbunden. Durch das Verdichterrad wird Ansaugluft aus der Sauganlage 12 der Brennkraftmaschine angesaugt und nach dem Verdichten über eine Saugleitung 13 mit gemeinsamen Drosselelement 14 zu den Einlaßkanälen 15 gefördert, die in die Zylinder 16 münden. Das Drosselelement 14 ist eine an sich bekannte Drosselklappe, die in diesem Ausführungsbeispiel dem Verdichterteil 11 nachgeschaltet ist und die Verbrennungsluftzufuhr zu den Einlaßkanälen 15 bzw. den Zylindern 16 regelt. Eine vorgeschaltete Anordnung des Drosselelementes ist ohne weiteres möglich.

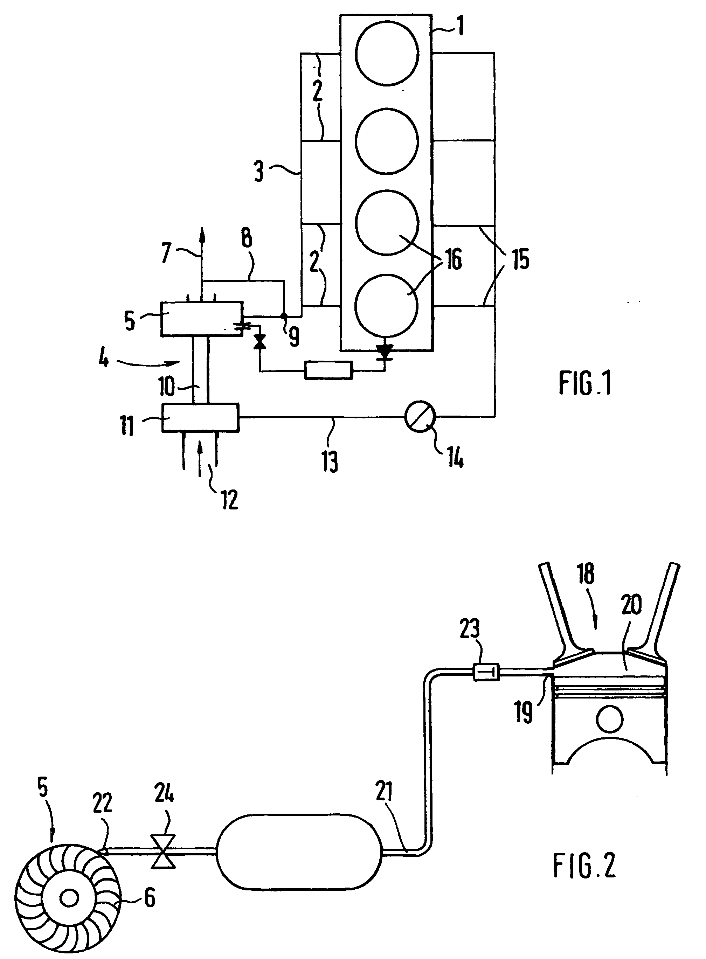

Im Bereich des in Fig. 1 dargestellten unteren Zylinders 16 wird die Wand des Zylinderkopfes 18 von einer Bohrung 19 durchdrungen, die in den Brennraum 20 mündet. Die Bohrung 19 ist mit einer Druckleitung 21 verbunden, die wiederum an einem Düsenelement 22 mündet, welches auf das Turbinenrad 6 des Abgasturboladers 4 gerichtet ist. In der Druckleitung 21 ist im Bereich des Zylinderkopfes ein Rückschlagventil 23 angeordnet, das bei einem positivem Differenzdruck (Brennraumdruck > Speicherdruck) öffnet und bei einem negativen Differenzdruck (Brennraumdruck < Speicherdruck) schließt. Am Düsenelement 22 ist ein Steuerventil 24 angeordnet, das in einer ersten Schaltstellung (Neutralstellung) das Düsenelement 22 bzw. dessen Zuleitung verschließt und in einer zweiten Schaltstellung die Verbindung zur Druckleitung 21 öffnet.

Im Betrieb der Brennkraftmaschine ist das Düsenelement 22 durch das Steuerventil 24 in dessen Neutralstellung verschlossen, so daß das Turbinenrad 6 nur durch die Verbrennungsabgase beaufschlagt wird. Die Druckleitung 21 ist über das Rückschlagventil 23 mit dem Brennraum 20 des Zylinders 16 verbunden, so daß sich ein Druck aufbaut, der dem maximalen Gasdruck im Zylinder 16 entspricht. Ein Rückströmen von Verbrennungsgasen in den Brennraum 20 wird durch das Rückschlagventil 23 verhindert.

Soll insbesondere beim Hochlauf des Abgasturboladers dessen Beschleunigung erhöht werden, wird das Steuerventil 24 in seine zweite Schaltstellung (Öffnungsstellung) geschaltet, so daß das in der Druckleitung 21 gespeicherte Gas über das beispielsweise als Lavaldüse ausgebildete Düsenelement 22 ausströmen und durch die nachfolgende Expansion das Turbinenrad zusätzlich antreiben kann. Damit wird ein schnelleres Hochlaufen bzw. eine bessere Beschleunigung des Turbinenrades erreicht. Wird das Sperrventil 24 wieder geschlossen, kann in der Druckleitung 21 über das Rückschlagventil 23 wieder Druck aufgebaut werden, der dem maximalen Verbrennungsdruck entspricht. Der Druckaufbau in der Druckleitung 21 erfolgt somit in einem Zeitraum, in dem keine Unterstützung des Abgasturboladers erforderlich ist. Die Ansteuerung des Steuerventils 24 erfolgt in Abhängigkeit von der Stellung des Drosselelementes 14 und des Abblasventils 9, wobei das Steuerventil 24 geöffnet wird, so lange das Abblasventil 9 geschlossen ist und gleichzeitig der Öffnungswinkel des als Drosselklappe ausgebildeten Drosselelementes 14 einen vorgegebenen Öffnungswert überschreitet. Das Steuerventil wird geschlossen, sobald am Drosselelement der vorgegebene Öffnungswert unterschritten wird und/oder das Abblasventil 9 geöffnet wird.

## Patentansprüche

1. Brennkraftmaschine mit Abgasturbolader (4), auf dessen Welle (10) ein Turbinenrad (6) und ein Verdichterrad angeordnet sind, wobei das Turbinenrad (6) in einer Abgasleitung (3,7) angeordnet ist und vom Abgas der Brennkraftmaschine beaufschlagbar ist, und mit einer Einrichtung zur Beschleunigung des Abgasturboladers, die zumindest ein mit dem Abgasturbolader zusammenwirkendes Düsenelement (22) enthält, **dadurch gekennzeichnet, dass** das Düsenelement auf das Turbinenrad ausgerichtet und über eine Druckleitung (21) mit dem Brennraum über eine Bohrung (19) im Zylinderkopf (18) mindestens eines Zylinders (16) verbunden ist, und dass in der Druckleitung (21) ein Rückschlagventil (23) angeordnet ist, das in Strömungsrichtung zum Düsenelement (22) öffnet.

2. Brennkraftmaschine nach Anspruch 1, **dadurch gekennzeichnet, dass** die Druckleitung (21) zwischen dem Düsenelement (22) und dem mindestens einen Zylinder (16) über ein Steuerventil (24) sperrbar ist.

3. Brennkraftmaschine nach Anspruch 2, **dadurch gekennzeichnet, dass** das Steuerventil (24) am Düsenelement (22) angeordnet ist.

4. Brennkraftmaschine nach einem der vorangehenden Ansprüche, **dadurch gekennzeichnet, dass** in der Druckleitung (21) zwischen dem Düsenelement (22) und dem mindestens einen Zylinder (16) ein Druckspeicher angeordnet ist.

5. Brennkraftmaschine nach einem der vorangehenden Ansprüche, **dadurch gekennzeichnet, dass** vor dem Turbinenrad (6) des Abgasturboladers (4) ein Abblasventil (9) angeordnet ist, dass die Verbrennungsluftzufuhr der Brennkraftmaschine über ein Drosselelement (14) geregelt ist, und dass das Steuerventil (24) in Abhängigkeit von der Schaltstellung des Abblasventils und der Schaltstellung des Drosselelementes betätigt wird.

6. Verfahren zur Beschleunigung eines Abgasturboladers (4) einer Brennkraftmaschine, deren Verbrennungsluftzufuhr über ein Drosselelement (14) geregelt wird, wobei das in einer Abgasleitung (3,7) angeordnete Turbinenrad (6) des Abgasturboladers über ein Düsenelement (22) anströmbar ist, und mit einem Abblasventil (9) vor dem Turbinenrad (6) des Abgasturboladers, **dadurch gekennzeichnet, dass** eine mit einem Rückschlagventil (23) versehene Druckleitung (21) von einem der Zylinder der Brennkraftmaschine zum Düsenelement (22) führt, in der ein Steuerventil (24) angeordnet ist, das geöffnet wird, sobald die Öffnung des Drosselelementes (14) einen vorgegebenen Öffnungswert überschreitet und das Abblasventil (9) sich gleichzeitig in seiner geschlossenen Schaltstellung befindet.

7. Verfahren nach Anspruch 6, **dadurch gekennzeichnet, dass** das Steuerventil (24) geschlossen wird, sobald das Abblasventil (9) bei Erreichen bzw. Überschreiten eines definierten Ladedruckes geöffnet wird.

## Claims

1. An internal-combustion engine with an exhaust-gas turbocharger (4), on the shaft (10) of which a turbine wheel (6) and a compressor wheel are arranged, wherein the turbine wheel (6) is arranged in an exhaust-gas line (3, 7) and can be acted upon by the exhaust gas of the internal-combustion engine, and with a device for accelerating the exhaust-gas turbocharger, which [device] contains at least one nozzle member (22) co-operating with the exhaust-gas turbocharger, **characterized in that** the nozzle member is orientated towards the turbine wheel and is connected by way of a pressure line (21) to the combustion chamber by way of a bore (19) in the cylinder head (18) of at least one cylinder (16), and a non-return valve (23) which opens in the flow direction towards the nozzle member (22) is arranged in the pressure line (21).

2. An internal-combustion engine according to Claim 1, **characterized in that** the pressure line (21) between the nozzle member (22) and the at least one cylinder (16) can be locked by way of a control valve (24).

3. An internal-combustion engine according to Claim 2, **characterized in that** the control valve (24) is arranged on the nozzle member (22).

4. An internal-combustion engine according to one of the preceding Claims, **characterized in that** a pressure reservoir is arranged in the pressure line (21) between the nozzle member (22) and the at least one cylinder (16).

5. An internal-combustion engine according to one of the preceding Claims, **characterized in that** a deflating valve (9) is arranged upstream of the turbine wheel (6) of the exhaust-gas turbocharger (4), the combustion-air supply of the internal-combustion engine is regulated by way of a throttle member (14), and the control valve (24) is actuated in a manner dependent upon the switching position of the deflating valve and the switching position of the throttle member.

6. A method of accelerating an exhaust-gas turbocharger (4) of an internal-combustion engine, the combustion-air supply of which is regulated by way of a throttle member (14), wherein the turbine wheel (6) of the exhaust-gas turbocharger arranged in an exhaust-gas line (3, 7) can have a flow directed against it by way of a nozzle member (22), and with a deflating valve (9) upstream of the turbine wheel (6) of the exhaust-gas turbocharger, **characterized in that** a pressure line (21) provided with a non-return valve (23) leads from one of the cylinders of the internal-combustion engine to the nozzle member (22), in which [pressure line] a control valve (24) is arranged which is opened as soon as the opening of the nozzle member (14) exceeds a pre-determined opening value and the deflating valve (9) is present in its closed switching position at the same time.

7. A method according to Claim 6, **characterized in that** the control valve (24) is closed as soon as the deflating valve (9) is opened after reaching or exceeding a defined charging pressure.

## Revendications

1. Moteur à combustion interne avec turbocompresseur d'échappement (4) sur l'arbre (10) duquel sont disposées une roue de turbine (6) et une roue de compresseur, la roue de turbine (6) étant disposée dans une conduite des gaz d'échappement (3, 7) et étant soumise aux gaz d'échappement du moteur à combustion interne, et avec un dispositif d'accélération du turbocompresseur d'échappement qui contient au moins un élément de buses (22) coopérant avec le turbocompresseur d'échappement, **caractérisé en ce que** l'élément de buses est orienté vers la roue de turbine et est relié, par une conduite sous pression (21), à la chambre de combustion par un perçage (19) de la culasse (18) d'au moins un cylindre (16), et **en ce que** dans la conduite sous pression (21) est disposé un clapet de non-retour (23) qui s'ouvre dans le sens d'écoulement vers l'élément de buses (22).

2. Moteur à combustion interne selon la revendication 1, **caractérisé en ce que** la conduite sous pression (21) peut être fermée entre l'élément de buses (22) et le ou les cylindres (16), au moyen d'une soupape de commande (24).

3. Moteur à combustion interne selon la revendication 2, **caractérisé en ce que** la soupape de commande (24) est disposée sur l'élément de buses (22).

4. Moteur à combustion interne selon l'une des revendications précédentes, **caractérisé en ce qu'**un accumulateur de pression est disposé dans la conduite sous pression (21) entre l'élément de buses (22) et le ou les cylindres (16).

5. Moteur à combustion interne selon l'une des revendications précédentes, **caractérisé en ce qu'**en amont de la roue de turbine (6) du turbocompresseur d'échappement (4) est disposée une soupape d'évacuation (9), **en ce que** l'arrivée d'air de combustion du moteur à combustion interne est régulée au moyen d'un élément d'étranglement (14), et **en ce que** la soupape de commande (24) est actionnée en fonction de la position de commutation de la soupape d'évacuation et de la position de commutation de l'élément d'étranglement.

6. Procédé pour accélérer un turbocompresseur d'échappement (4) d'un moteur à combustion interne dont l'arrivée d'air de combustion est régulée au moyen d'un élément d'étranglement (14), la roue de turbine (6), disposée dans une conduite des gaz d'échappement (3, 7), du turbocompresseur d'échappement arrivant à travers un élément de busses (22), et avec une soupape d'évacuation (9) en amont de la roue de turbine (6) du turbocompresseur d'échappement, **caractérisé en ce qu'**une conduite sous pression (21), pourvue d'un clapet de non-retour (23), mène de l'un des cylindres du moteur à combustion interne à l'élément de buses (22), dans laquelle est disposée une soupape de commande (24) qui s'ouvre dès que l'ouverture de l'élément d'étranglement (14) dépasse une valeur d'ouverture prédéfinie, et la soupape d'évacuation (9) se trouve en même temps dans sa position de commutation fermée.

7. Procédé selon la revendication 6, **caractérisé en ce que** la soupape de commande (24) est fermée dès que la soupape d'évacuation (9) est ouverte lorsqu'est atteinte ou dépassée une pression de charge définie.
